# FASCICULE DE BREVET EUROPEEN

(11) **EP 2 456 014 B1**
(45) Date de publication et mention de la délivrance du brevet: **02.03.2016**
(21) Numéro de dépôt: 11186152.2
(22) Date de dépôt: 21.10.2011
(51) Int. Cl.: H01R 9/18, H01R 11/01, H01R 43/24, H02K 5/22

(54) **Borne de connexion entre une machine électrique tournante d'un véhicule automobile et un câble du circuit électrique dudit véhicule**
Verbindungsklemme zwischen einer elektrischen umlaufenden Maschine eines Kraftfahrzeugs und einem Stromkreiskabel des besagten Fahrzeugs
Connection terminal between a rotating electric machine of an automobile and a cable of the electric circuit of said vehicle

(30) Priorité: 22.11.2010 FR 1059569
(43) Date de publication de la demande: 23.05.2012
(73) Titulaire: VALEO EQUIPEMENTS ELECTRIQUES MOTEUR, 94046 Créteil Cedex (FR)
(72) Inventeur: Boudjemai, Farouk, 91460 MARCOUSSIS (FR); Dubuc, Cyril, 77260 SEPT SORTS (FR); Lafabrie, Bryann, 94000 CRETEIL (FR); Boussicot, Frédéric, 94000 CRETEIL (FR)

(56) Documents cités:
- EP-A1- 1 367 694
- EP-A2- 0 853 369
- EP-A2- 1 624 548
- US-A- 2 874 206
- US-A1- 2002 086 570
- US-A1- 2005 218 733

## Description

La présente invention se rapporte aux dispositifs permettant de connecter électriquement un câble du circuit électrique d'un véhicule automobile (par exemple, un câble de batterie) à une borne de prise de courant d'une machine électrique tournante telle qu'un alternateur ou un alterno-démarreur du même véhicule automobile.

Pour assurer la stabilité de la connexion, ainsi que pour des raisons d'encombrement, le câble du circuit électrique du véhicule est classiquement maintenu mécaniquement sur la machine électrique tournante, plus précisément sur un dispositif dissipateur thermique de celle-ci. Toutefois, ce dernier étant réalisé dans un matériau métallique et, par construction, relié à la masse électrique du véhicule, les moyens utilisés pour réaliser le maintien mécanique de ce câble, lui-même relié porté à un potentiel non nul, doivent garantir l'isolation électrique par rapport à la masse.

Pour ce faire, il est connu d'enfiler la cosse métallique du câble sur un ergot mâle métallique de fixation émergeant du dissipateur thermique de la machine électrique tournante, ergot sur lequel ont préalablement été successivement enfilées respectivement, une rondelle isolante à canon, puis une rondelle mince de cuivre. La cosse métallique est ensuite bloquée en position au moyen d'une rondelle et d'un écrou de serrage. La connexion à la borne de prise de courant de la machine électrique tournante est alors réalisée par soudure d'un élément conducteur entre celle-ci et un appendice qui s'étend à partir du pourtour de la rondelle de cuivre.

Un tel assemblage, bien qu'il présente l'avantage d'être simple et de pouvoir être réalisé au moyen d'éléments facilement standardisables (et donc pour un coût réduit), n'est toutefois pas exempt d'inconvénients.

En particulier, les solutions existantes pour le blocage en rotation de l'ensemble "cosse métallique / écrou de serrage" sur la machine électrique tournante ne sont pas entièrement satisfaisantes et ont tendance à se dégrader au fil du temps, sous l'effet par exemple des dilatations thermiques des différents matériaux lorsque le véhicule est en fonctionnement.

Par ailleurs, la protection offerte par des chapeaux d'isolation (par exemple réalisés dans des matériaux élastomères et montés coulissants sur le câble électrique du véhicule) destinés à venir se placer sur la connexion, une fois celle-ci assemblée, a tendance à se dégrader dans le temps, notamment en raison des vibrations induites par le fonctionnement du moteur et les déplacements du véhicule, voire lors du montage du véhicule en usine, sous l'effet de chocs reçus accidentellement. Sous l'effet répété de ces vibrations, ces chapeaux d'isolation ont tendance à bouger et, même légers, ces déplacements peuvent, à la longue, conduire la connexion à être exposée aux poussières, limailles, ou, à l'extrême, à certains corps étrangers. Le risque de court-circuit avec la masse, représentée par l'ergot du dissipateur thermique sur lequel sont enfilées la rondelle isolante, la rondelle de connexion avec la machine électrique tournante et la cosse du câble, augmente alors de manière importante, pouvant conduire à un endommagement sérieux non seulement de la connexion mais aussi de l'ensemble de la machine électrique tournante.

Le document EP 1624548 A2 décrit une borne deconnexion selon le préambule de la revendication 1.

L'invention s'est fixé pour but de pallier ces divers inconvénients tout en proposant un dispositif à bas coût et à faible encombrement, compatible avec les exigences d'une application automobile en grande série.

Selon un premier aspect, l'invention concerne une borne de connexion pour la liaison électriquement isolée d'un câble électrique d'un véhicule automobile à une machine électrique tournante du véhicule, la borne étant constituée, d'une part, d'une âme qui porte des moyens femelles pour sa fixation électriquement isolée sur un dissipateur thermique de la machine électrique tournante, des moyens mâles électriquement conducteurs de connexion à une cosse métallique femelle disposée à une extrémité du câble électrique, ainsi que des moyens électriquement conducteurs de connexion à une borne de prise de courant de la machine électrique tournante ; et, d'autre part, d'une enveloppe réalisée par surmoulage d'un matériau électriquement isolant sur l'âme, l'enveloppe isolante chemisant entièrement l'ensemble des moyens femelles de fixation et moyens électriquement conducteurs de connexion, à l'exception des surfaces de connexion respectivement à la borne de prise de courant et à la cosse métallique femelle. Typiquement, l'enveloppe surmoulée est en matériau plastique.

Conformément à l'invention, les moyens femelles de fixation comportent deux inserts réalisés dans un matériau isolant à caractéristiques thermiques et mécaniques élevées. Typiquement, ces inserts sont réalisés dans un matériau isolant dont les performances électriques et mécaniques sont supérieures à celles du matériau de surmoulage qui constitue l'enveloppe isolante.

La présence de ces inserts garantit notamment, grâce à la stabilité thermique et mécanique dans le temps du matériau qui les constitue, la stabilité et le maintien, dans le temps, de la fixation sur le dissipateur thermique de la machine électrique tournante.

La borne de connexion selon l'invention permet donc la réalisation d'une connexion entièrement électriquement isolée de son environnement, avec une excellente stabilité thermique et mécanique de sa fixation sur le dissipateur thermique de la machine électrique tournante.

Pour réaliser la fixation sur la machine électrique tournante, les moyens femelles de fixation coopèrent avec des moyens mâles complémentaires : ergot métallique émergeant du dissipateur thermique, ou vis insérée à la fois dans la borne de connexion selon l'invention et dans un orifice correspondant dudit dissipateur.

Selon une autre caractéristique de l'invention, les moyens de connexion à la cosse du câble électrique du véhicule se présentent sous la forme d'une fiche mâle conductrice portée par l'âme de la borne de connexion selon l'invention. Cette fiche est électriquement reliée, au sein de la borne de connexion selon l'invention, à un élément conducteur dont une partie émerge de l'enveloppe isolante pour être relié, par des moyens appropriés (à titre d'exemple non limitatif : par soudure d'un fil de raccordement), à la borne de prise de courant de la machine électrique tournante.

Selon une autre caractéristique de l'invention dans un de ses modes privilégiés de réalisation, l'enveloppe isolante comporte également avantageusement une jupe qui délimite l'espace dans lequel la fiche mâle de la borne de connexion selon l'invention est reliée à la cosse métallique femelle du câble du véhicule. Cette jupe permet de réduire encore tout risque de contact accidentel de ladite cosse métallique avec son environnement.

Selon une caractéristique complémentaire de l'invention dans ce mode de réalisation, cette jupe est configurée pour assurer également une indexation dans une position prédéterminée de la connexion avec la cosse métallique du câble.

Selon une autre de ses caractéristiques, la borne de connexion selon l'invention comporte également des moyens d'indexation sur le dissipateur thermique de la machine électrique tournante. Elle se trouve ainsi dans une position constante, reproductible, et permet que la connexion soit réalisée dans une position constante et reproductible, limitant ainsi considérablement tout risque de contact accidentel avec un élément du voisinage dans le véhicule.

L'invention sera mieux comprise, et ses avantages ressortiront plus clairement de la description qui suit d'un de ses modes de réalisation privilégiés, illustré par les figures suivantes :
- la figure 1, qui est une vue en perspective de l'ensemble de la borne de connexion selon l'invention,
- la figure 2, qui est une vue en perspective d'un élément de l'âme d'une borne de connexion selon l'invention,
- la figure 3, qui est une vue en perspective éclatée de l'ensemble des composants de l'âme d'une borne de connexion selon l'invention,
- la figure 4, qui est une vue en perspective de l'âme de la borne de connexion selon l'invention, assemblée,
- la figure 5, qui est une vue de côté de l'assemblage des différents composants de l'âme de la borne de connexion selon l'invention,
- la figure 6, qui est une vue en perspective de la borne de connexion selon l'invention et d'une partie de son enveloppe isolante,
- la figure 7, qui est une vue en coupe transversale de l'ensemble de la borne de connexion selon l'invention,
- et la figure 8, qui est une vue de dessus de la borne de connexion selon l'invention, dans un mode de réalisation selon lequel l'enveloppe isolante ne comporte pas de jupe.

Pour simplifier la lecture, on considérera dans ce qui suit que la machine électrique tournante du véhicule est un alternateur, ce qui suit s'appliquant de la même manière quelle que soit la nature de la machine électrique tournante considérée au sein du véhicule.

Une borne de connexion A selon l'invention, telle que rapidement décrite précédemment et telle que représentée par les figures, est constituée d'une âme 1 et d'une enveloppe électriquement isolante 2.

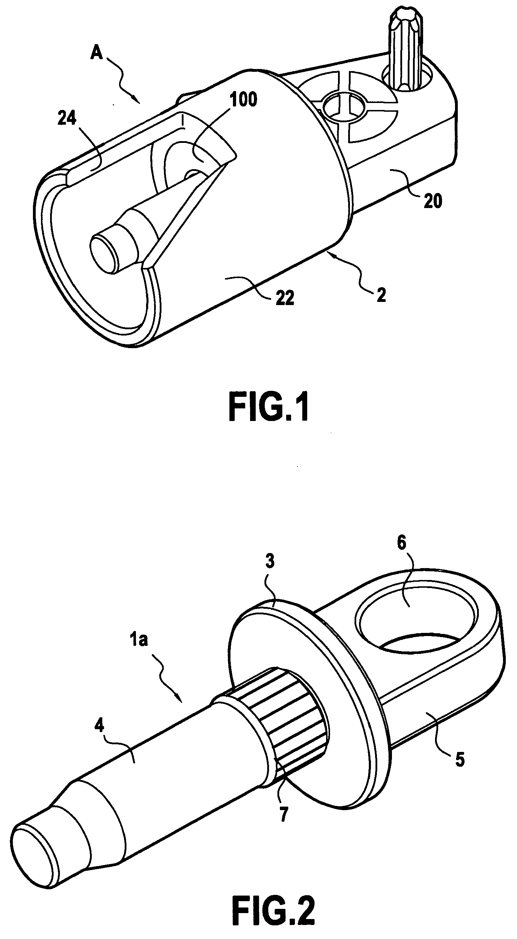

L'âme 1, illustrée par les figures 2, 3, 4 et 5, comprend une borne 1 a réalisée dans un matériau conducteur de faible coût (par exemple du fer), dont la base 3 forme un disque perpendiculaire à l'axe de sa tige filetée 4. S'étendant à partir de la base 3, la borne 1 a comporte, à l'opposé de la tige 4 et selon un plan contenant à l'axe de cette dernière, une plaque plane 5 percée d'un orifice 6.

Selon le mode de réalisation illustré par les figures, des rainures axiales 7 sont ménagées sur le pourtour de la tige 4 à partir de la base 3, sur une partie de la hauteur de ladite tige filetée. Ces rainures sont conformées de telle manière que leur présence augmente légèrement le diamètre de la tige 4 au voisinage de sa base 3, augmentation de diamètre dont l'intérêt sera précisé plus loin.

La plaque 5 s'étend selon un plan diamétral dans le prolongement de l'axe de la tige 4, l'axe de l'orifice 6 dont elle est percée se trouvant ainsi perpendiculaire à l'axe de ladite tige. Les bords de la plaque 5 sont sensiblement arrondis autour de l'orifice 6 : la plaque 5 forme ainsi schématiquement un anneau à la base de la borne 1 a de l'âme 1, à l'opposé de la tige 4. Les bords de l'anneau 5 sont également chanfreinés.

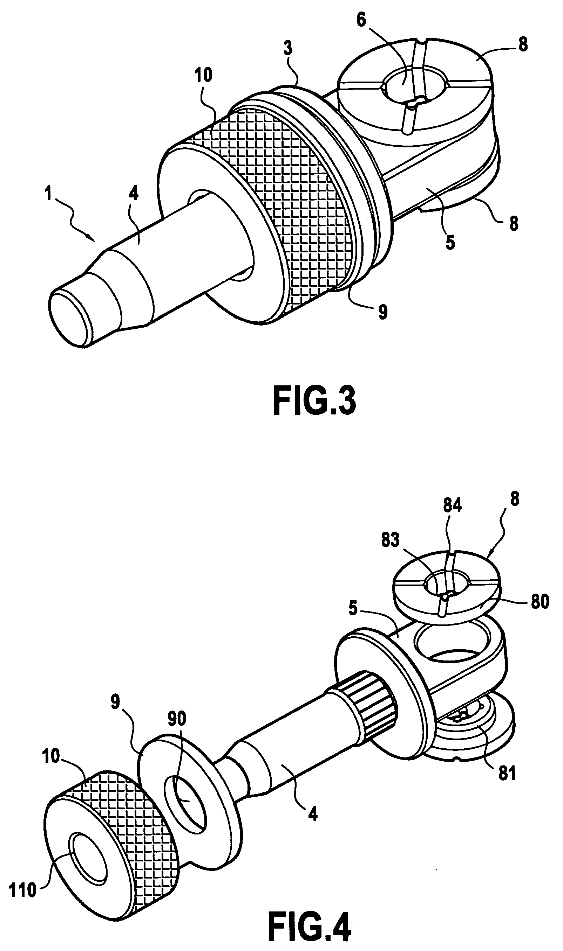

Ainsi que le montrent les figures 3 et 4, l'orifice 6 accueille axialement deux inserts 8. Ces inserts sont réalisés dans un matériau électriquement isolant et possédant une résistance mécanique et une résistance thermique élevées. Ils sont, par exemple, réalisés dans un matériau plastique thermodurcissable à base de résines phénoliques.

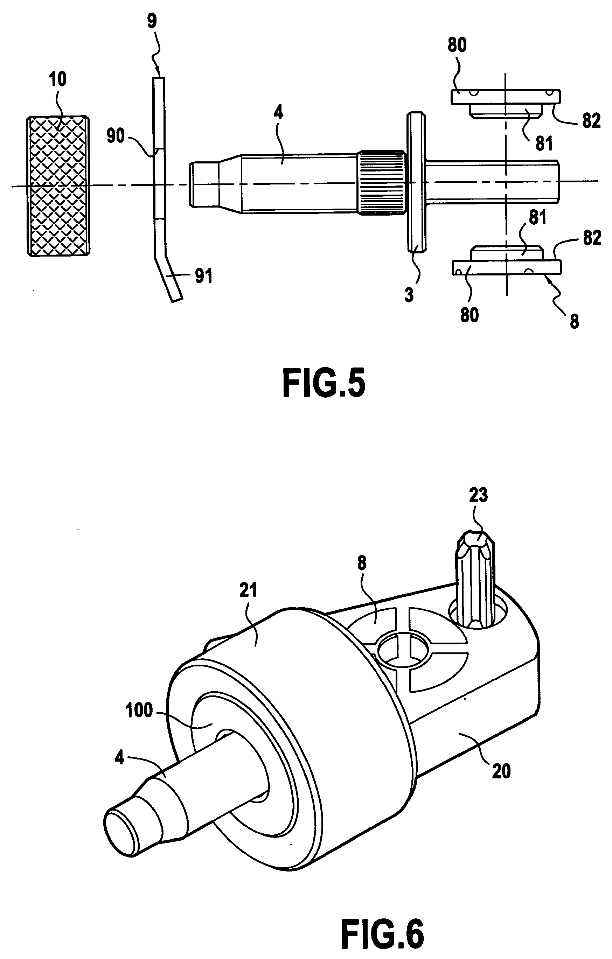

Chacun des inserts 8 (voir également la figure 5) a la forme d'une rondelle 80 sur une partie de l'épaisseur de laquelle est ménagé un épaulement 82 qui dégage un canon de plus faible diamètre extérieur 81. Le diamètre extérieur du canon 81 est très légèrement inférieur au diamètre intérieur de l'orifice 6 de l'anneau 5, et le diamètre extérieur de la rondelle 80 est à la fois supérieur au diamètre de ce même orifice et au plus égal au diamètre extérieur de l'anneau 5. Ainsi, lorsque le canon 81 de l'un des inserts 8 est inséré dans l'orifice 6, la rondelle 80 de ce même insert se trouve en appui sur la plaque 5 et recouvre celle-ci tout autour de l'orifice 6. Par ailleurs, la hauteur de chaque canon 81 est inférieure ou égale à la moitié de l'épaisseur de l'anneau 5.

Un orifice axial 83 traverse chaque insert 8 de part en part. En outre, plusieurs canaux 84 sont ménagés radialement sur la face de la rondelle 80 opposée à la face sur laquelle est ménagé l'épaulement qui dégage le canon 81. La figure 4 montre un mode de réalisation selon lequel quatre de ces canaux sont régulièrement répartis sur la surface sur laquelle ils sont ménagés, il est toutefois à noter que ces canaux peuvent être en nombre différent tant qu'ils restent régulièrement répartis radialement sur la surface qui les porte.

Pour assembler l'âme 1 de la borne de connexion A selon l'invention, et ainsi que l'illustrent les figures 3, 4 et 5, un insert 8 est emboîté, par son canon 81, dans l'orifice 6, de chaque côté de la plaque 5. La hauteur de chacun des canons 81 qui pénètre l'orifice 6 étant inférieure à la moitié de l'épaisseur de la plaque 5, chacun des inserts 8 est ainsi placé en appui de l'une des faces de ladite plaque 5 par l'épaulement 82 qu'il comporte.

Une plaquette 9, réalisée dans un matériau présentant une conductivité électrique et une conductivité thermique élevées (préférentiellement, du cuivre) est ensuite enfilée sur la tige filetée 4 par un orifice 90 qu'elle comporte, et placée en butée sur la base 3 de la borne 1 a.

La plaquette 9, qui a sensiblement la forme d'une rondelle mince à partir d'une partie du pourtour de laquelle s'étend un appendice 91 dont le rôle sera précisé plus loin, est de faible épaisseur. Elle est, par exemple, obtenue par découpe d'une tôle mince de cuivre : son épaisseur est donc nettement inférieure à la longueur des rainures 7 ménagées sur le pourtour de la base de la tige filetée 4 de la borne 1 a.

Le diamètre de l'orifice 90 est très légèrement inférieur au diamètre extérieur de la tige filetée 4 en sa partie munie des rainures 7, de telle manière que la plaquette 9 doit être insérée à force sur ladite tige filetée pour être mise en butée contre la base 3 de la borne 1 a.

Une entretoise 10, plus épaisse que la plaquette 9, est ensuite enfilée sur la tige filetée 4 et prends en sandwich la plaquette 9 contre la base 3 de la borne 1 a. L'entretoise 10 doit garantir une zone de contact électrique avec la plaquette 9 en cuivre. C'est une zone de contact électrique qu'il faut garantir.

L'entretoise 10 est de préférence réalisée en laiton, mais pas exclusivement. Le laiton garantit un très bon contact électrique dans la durée, même après de nombreux montages/démontages de la cosse de câble électrique fixée à la borne. De plus, par rapport au cuivre, le laiton facilite la réalisation de l'entretoise 10 et a un coût qui reste raisonnable. Le laiton offre également un avantage en ce qu'il ne demande aucun traitement de surface contre l'oxydation et conserve un bon aspect extérieur, contrairement au cuivre. Ce dernier point n'est pas à négliger compte-tenu que l'entretoise 10 comporte une face visible de l'extérieur par l'utilisateur.

Le diamètre intérieur de l'entretoise 10 est dimensionné de telle sorte que l'insertion de celui-ci sur les rainures 7 ménagées à la base de la tige filetée 4 soit également faite à force, garantissant ainsi le blocage simultané et durable, d'une part, de la plaquette 9 en sandwich entre la base 3 de la borne 1 a et ledit écrou de serrage et, d'autre part, de ladite entretoise 10 elle-même.

L'enveloppe isolante 2 est ensuite réalisée par surmoulage d'un matériau plastique léger et d'un coût réduit, comme par exemple un polypropylène. Ainsi que le montrent les figures 1, 6 et 8, l'enveloppe isolante 2, réalisée d'une seule pièce, présente des formes différentes selon la partie de l'âme 1 qu'elle chemise, et l'on peut schématiquement distinguer, parmi ces formes, une partie 20 qui chemise l'anneau 5, un corps cylindrique 21 et, selon le mode de réalisation illustré par les figures 1 et 6, une jupe 22.

La partie 20 recouvre totalement l'anneau 5 en laissant affleurer la face extrémale de chacun des inserts 8. La forme extérieure de la partie 20 est similaire à celle de l'anneau 5. S'insinuant dans les canaux 83, le matériau de surmoulage assure le maintien en place des inserts 8 et la cohésion de l'assemblage.

Il est à noter que, au cours de l'opération de surmoulage, un élément amovible est inséré dans l'orifice 83 des inserts 8 pour éviter de les combler. Il est également à noter que les chanfreins réalisés sur les bords de l'anneau 5, en augmentant la surface de contact de ce dernier avec le matériau de surmoulage, contribuent à augmenter la cohésion de l'ensemble.

La partie 20 de l'enveloppe 2 comporte en outre un ergot 23 qui s'étend perpendiculairement à partir de l'une de ses faces planes, et qui constitue un élément d'indexation pour l'installation de la borne de connexion A sur la machine électrique tournante. L'ergot 23 est placé de telle manière qu'une fois installé dans un logement prévu à cet effet sur le dissipateur thermique de l'alternateur, les orifices concentriques 6, 83 soient en coincidence avec le dispositif prévu, sur ce dissipateur thermique, pour la fixation de la borne A : ergot mâle émergeant du dissipateur thermique et venant s'enficher dans les orifices concentriques 6, 83, ou orifice ménagé dans ledit dissipateur thermique et accueillant une vis insérée dans lesdits orifices concentriques 6, 83.

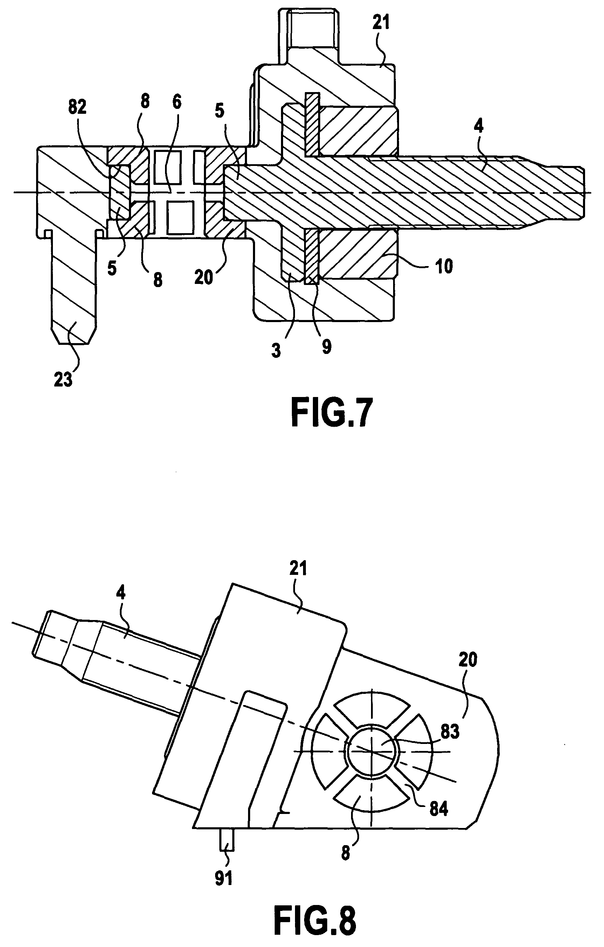

Le corps 21 (voir figure 6), sensiblement cylindrique, s'étend autour de la base 3, de la plaquette 9 et de l'entretoise 10 de l'âme 1 de la borne de connexion selon l'invention qu'il chemise totalement également, à l'exception de l'appendice 91 (voir figure 8) qu'il laisse émerger en partie, et de la face extrêmale 100 de l'entretoise 10 qui affleure la face transversale correspondante du corps 21 (voir figure 6).

La surface extérieure de l'entretoise 10 étant moletée, l'accrochage du matériau de surmoulage de l'enveloppe isolante 2 est meilleur, garantissant une meilleure cohésion de l'ensemble.

La jupe 22 (voir figure 1) s'étend, à partir du corps 21, dans la direction de la tige 4 de l'âme de la borne de connexion A, et sur une longueur légèrement supérieure à la longueur de ladite tige qui émerge du corps 21. Son diamètre extérieur est sensiblement égal à celui du corps 21, et elle est de faible épaisseur, de telle manière qu'elle délimite un espace suffisant autour de la tige 4. Plus précisément, son épaisseur est définie pour que son diamètre intérieur soit légèrement supérieur au diamètre extérieur de la cosse métallique de connexion du câble électrique du véhicule.

La jupe 22 comporte une ouverture polygonale 24 (sensiblement trapézoïdale sur la figure 1) qui s'étend sur toute sa longueur et sur une partie de son pourtour, et dont le rôle sera précisé plus loin.

La borne de connexion A ainsi constitué de son âme 1 et de son enveloppe surmoulée isolante 2 est compacte et reste de faibles dimensions. Elle peut, grâce à l'ergot 23, être placée dans une position définie et reproductible sur un dissipateur thermique de l'alternateur.

Une fois l'ergot 23 mis en place et la borne de connexion A fixée à ce dissipateur thermique, la cosse métallique du câble est enfilée, par l'orifice qu'elle comporte, sur la tige filetée 4, et placée en butée contre la face affleurante 100 de l'entretoise 10, puis bloquée en position par un écrou de serrage.

La partie de l'appendice 91 de la plaqutte 9 qui émerge du corps 21 est alors raccordée, par exemple par soudure d'un fil conducteur, à une borne de prise de courant de l'alternateur. La cosse métallique du câble se trouve ainsi, par le biais de l'entretoise 10 contre lequel elle est bloquée en appui par son écrou de serrage, en contact électrique avec la plaquette 9 et, par là, avec la borne de prise de courant de l'alternateur.

Il est à noter que le contact électrique entre la cosse métallique du câble et la plaquette 9 est ici d'autant meilleur qu'il est réalisé par le biais de surfaces de contact : il ne présente donc aucune discontinuité. De plus, ce mode de contact permet un bon transfert thermique entre les différents composants, et, combiné à l'utilisation de cuivre pour la réalisation de la plaquette 9, il permet d'éviter toute éventuelle accumulation de calories au sein de la partie 21 de l'enveloppe isolante 2 lors du fonctionnement du véhicule.

Les inserts 8 réalisés dans un matériau qui présente une bonne résistance mécanique à chaud assurent le maintien dans le temps du serrage de la fixation de la borne de connexion A sur le dissipateur thermique de l'alternateur, en particulier contre tout éventuel desserrage sous l'effet des variations thermiques induites par le fonctionnement du véhicule.

Il ressort clairement de ce qui précède que la connexion ainsi réalisée est orientée à 90 degrés par rapport à une connexion réalisée au moyen des solutions connues de l'art antérieur. Cette orientation nouvelle offre, d'une part, un accès plus aisé pour le montage de la connexion avec le câble électrique. Elle permet, en outre, de déporter la réalisation de cette connexion à la périphérie de l'alternateur, la rendant ainsi plus accessible pour le montage et pour toute éventuelle intervention ultérieure.

Entièrement isolée électriquement grâce à la présence de l'enveloppe isolante surmoulée 2, la connexion ainsi établie présente un risque très réduit, voire nul, de court-circuit de l'un de ses éléments avec un des éléments du voisinage dans le véhicule.

La présence de la jupe 22 réduit encore ces risques, tout en offrant, grâce à l'ouverture 24 que cette jupe comporte, une possibilité d'indexation facilitant encore le montage de la cosse métallique du câble et renforçant le maintien mécanique de cette connexion par blocage en rotation du câble par les bords de la fenêtre d'indexation 24.

Il est toutefois à noter que la jupe 22 peut, dans certains modes de réalisation particuliers, être absente sans que cela nuise aux fonctions et avantages essentiels de la borne de connexion A selon l'invention.

L'invention permet ainsi, tout en mettant en oeuvre des matériaux de faible coût compatibles avec une réalisation en grande série, l'obtention d'une connexion parfaitement isolée et stable entre le câble électrique du véhicule et la machine électrique tournante dudit véhicule.

Il est toutefois à noter que l'invention ne saurait se limiter aux moyens et modes de réalisation décrits dans le présent document, et qu'elle s'étend à tous moyens équivalents et à toute combinaison techniquement opérante de tels moyens.

## Revendications

1. Borne de connexion pour la liaison électriquement isolée d'un câble électrique d'un véhicule automobile à une machine électrique tournante dudit véhicule, ladite borne étant constituée, d'une part, d'une âme (1) qui porte des moyens femelles (5, 6, 8) pour sa fixation électriquement isolée sur un dissipateur thermique de ladite machine électrique tournante, des moyens mâles (4) électriquement conducteurs de connexion à une cosse métallique femelle disposée à une extrémité dudit câble électrique, ainsi que des moyens électriquement conducteurs (9, 10) de connexion à une borne de prise de courant de ladite machine électrique tournante ; et, d'autre part, d'une enveloppe (2) réalisée par surmoulage d'un matériau électriquement isolant sur ladite âme (1), ladite enveloppe isolante (2) chemisant entièrement l'ensemble desdits moyens femelles de fixation (5, 6, 8) et moyens électriquement conducteurs de connexion (9, 10), à l'exception des surfaces de connexion (91, 100) respectivement à ladite borne de prise de courant et à ladite cosse métallique femelle, **caractérisé en ce que** lesdits moyens femelles de fixation comportent deux inserts (8) réalisés dans un matériau isolant à caractéristiques thermiques et mécaniques élevées.

2. Borne de connexion selon la revendication 1, **caractérisée en ce que** ladite âme (1) comporte une borne (1 a) à partir de la base (3) duquel s'étendent, d'une part, une tige filetée (4) de connexion à ladite cosse métallique femelle dudit câble électrique du véhicule, et, d'autre part, à l'opposé de ladite tige filetée (4), un anneau (5) par l'orifice (6) duquel est réalisée la fixation, électriquement isolée, sur un dissipateur thermique, lui-même relié à la masse, de la machine électrique tournante.

3. Borne de connexion selon la revendication 2, **caractérisée en ce que** lesdits deux inserts (8) sont insérés dans ledit orifice (6) respectivement en chacune des faces dudit anneau (5), chacun desdits inserts (8) comportant une partie (80) venant en appui de la face de l'anneau (5) par laquelle il est mis en place, un canon (81) s'insérant dans ledit orifice (6), et un orifice traversant (83).

4. Borne de connexion selon l'une quelconque des revendications 1 à 3, **caractérisée en ce que** l'enveloppe isolante surmoulée (2) comporte des moyens d'indexation (23) sur le dissipateur thermique de la machine électrique tournante.

5. Borne de connexion selon l'une quelconque des revendications 1 à 4, **caractérisée en ce que** l'enveloppe isolante (2) comprend une jupe (22) dans laquelle est ménagée une fenêtre d'indexation (24) pour le montage de la cosse métallique du câble électrique du véhicule.

6. Procédé de fabrication d'une borne de connexion selon l'une quelconque des revendications 1 à 5, **caractérisé en ce qu'**il comprend :
- une étape de réalisation d'une âme (1) formée d'une borne (1 a) à partir de la base (3) duquel s'étendent, de part et d'autre, respectivement, une tige filetée (4) de connexion à une cosse métallique femelle d'un câble électrique du véhicule, et, d'autre part, à l'opposé de ladite tige filetée (4), un anneau (5) par l'orifice (6) duquel s'effectue la fixation de ladite borne de connexion à la machine électrique tournante du véhicule,
- une étape d'insertion, dans ledit orifice (6), respectivement en chacune des faces dudit anneau (5), de deux inserts (8) réalisés dans un matériau isolant à propriétés thermiques et mécaniques élevées comportant chacun une rondelle d'appui (80) sur la face par laquelle il est inséré sur ledit anneau (5), un canon (81) qui s'insère dans ledit orifice (6), et un orifice traversant (83),
- une étape d'insertion à force, en butée contre la face de ladite base (3) opposée audit anneau (5), d'une plaquette conductrice (9), puis d'insertion, en butée contre ladite plaquette (9), d'une entretoise (10),
- une étape de surmoulage, sur l'ensemble formé par ladite borne (1 a), les inserts (8) mis en place dans l'orifice (6), la plaquette (9) et l'entretoise (10), d'une enveloppe isolante (2) dont une partie (20) chemise l'ensemble formé par l'anneau (5) et lesdits inserts (8) en laissant affleurer ces derniers, et dont un corps (21) chemise la base (3) de ladite borne (1 a) ainsi que lesdites plaquettes (9) et entretoise (10) en laissant affleurer la face extrêmale transversale (100) de l'entretoise (10) ainsi qu'une partie d'un appendice (91) que la plaquette (9) comporte.

7. Procédé selon la revendication 6, **caractérisé en ce que** l'étape de surmoulage de l'enveloppe isolante (2) comprend une phase de surmoulage, à partir dudit corps (21), d'une jupe (22) s'étendant sur toute la longueur de la tige filetée (4), jupe dont le diamètre extérieur est sensiblement égal à celui dudit corps (21), et dont le diamètre intérieur est supérieur à celui de ladite tige filetée (4) pour ménager autour de celle-ci un espace d'insertion d'une cosse métallique d'un câble électrique du véhicule, jupe (22) sur la longueur de laquelle est ménagée une fenêtre d'indexation (24) pour la mise en place de ladite cosse autour de la tige filetée (4).

## Patentansprüche

1. Verbindungsanschluss für die isolierte elektrische Verbindung eines Elektrokabels eines Kraftfahrzeugs mit einer drehenden elektrischen Maschine des Fahrzeugs, wobei der Anschluss gebildet ist einerseits aus einer Seele (1), die Buchsenmittel (5, 6, 8) für ihre isolierte elektrische Verbindung an einem Kühlkörper der drehenden elektrischen Maschine, elektrisch leitende Steckermittel (4) für die Verbindung mit einer hohlen Metallhülse, die an einem Ende des Elektrokabels angeordnet ist, sowie elektrisch leitende Mittel (9, 10) für die Verbindung mit einem Stromentnahmeanschluss der drehenden elektrischen Maschine trägt; und andererseits aus einer Umhüllung (2), die durch Überformen der Seele (1) mit einem elektrisch isolierenden Material verwirklicht ist, wobei die isolierende Umhüllung (2) die Gesamtheit der Befestigungs-Buchsenmittel (5, 6, 8) und der elektrisch leitenden Verbindungsmittel (9, 10) mit Ausnahme der jeweiligen Verbindungsoberflächen (91, 100) mit dem Stromentnahmeanschluss und mit der hohlen Metallhülse umhüllt, **dadurch gekennzeichnet, dass** die Befestigungs-Buchsenmittel zwei Einsätze (8) umfassen, die aus einem Isoliermaterial verwirklicht sind und gute thermische und mechanische Eigenschaften besitzen.

2. Verbindungsanschluss nach Anspruch 1, **dadurch gekennzeichnet, dass** die Seele (1) einen Anschluss (1a) umfasst, von dessen Basis (3) sich einerseits ein Gewindestift (4) für die Verbindung mit der hohlen Metallhülse des Elektrokabels des Fahrzeugs und andererseits gegenüber dem Gewindestift (4) ein Ring (5), durch dessen Öffnung (6) die elektrisch isolierte Befestigung an einem seinerseits mit Masse verbundenen Kühlkörper der drehenden elektrischen Maschine verwirklicht ist, erstrecken.

3. Verbindungsanschluss nach Anspruch 2, **dadurch gekennzeichnet, dass** die zwei Einsätze (8) in die Öffnung (6) auf den beiden jeweiligen Seiten des Rings (5) eingesetzt sind, wobei jeder der Einsätze (8) einen Teil (80), der sich auf jener Seite des Rings (5) abstützt, auf der er angeordnet ist, wobei ein Lauf (81) in die Öffnung (6) eingesetzt ist, und eine Durchgangsöffnung (83) aufweist.

4. Verbindungsanschluss nach einem der Ansprüche 1 bis 3, **dadurch gekennzeichnet, dass** die überformte Isolierhülse (2) Indexierungsmittel (23) an dem Kühlkörper der drehenden elektrischen Maschine umfasst.

5. Verbindungsanschluss nach einem der Ansprüche 1 bis 4, **dadurch gekennzeichnet, dass** die Isolierumhüllung (2) eine Verkleidung (22) aufweist, in der ein Indexierungsfenster (24) für die Montage der Metallhülse des Elektrokabels des Fahrzeugs ausgespart ist.

6. Verfahren für die Herstellung eines Verbindungsanschlusses nach einem der Ansprüche 1 bis 5, **dadurch gekennzeichnet, dass** es Folgendes umfasst:
- einen Schritt des Verwirklichens einer Seele (1), die aus einem Anschluss (1a) gebildet ist, von dessen Basis (3) sich beiderseits ein Gewindestift (4) für die Verbindung mit einer hohlen Metallhülse eines Elektrokabels des Fahrzeugs und andererseits gegenüber dem Gewindestift (4) ein Ring (5), durch dessen Öffnung (6) die Befestigung des Verbindungsanschlusses mit der drehenden elektrischen Maschine des Fahrzeugs erfolgt, erstrecken,
- einen Schritt des Einsetzens in die Öffnung (6) auf jeder der Seiten des Rings (5) zweier Einsätze (8), die aus einem Isoliermaterial mit guten thermischen und mechanischen Eigenschaften verwirklicht sind und jeweils eine Abstützscheibe (80) auf der Seite, mit der sie in den Ring (5) eingesetzt sind, einen Lauf (81), der in die Öffnung (6) eingesetzt ist und eine Durchgangsöffnung (83) umfassen,
- einen Schritt des erzwungenen Einsetzens anliegend an der Fläche der Basis (3) gegenüber dem Ring (5) eines leitenden Plättchens (9) und dann des Einsetzens anliegend an dem Plättchen (9) eines Abstandshalters (10),
- einen Schritt des Überformens der Gesamtheit, die durch den Anschluss (1a), die in der Öffnung (6) angeordneten Einsätze (8), das Plättchen (9) und den Abstandshalter (10) gebildet ist, mit einer Isolierumhüllung (2), wovon ein Teil (20) die Gesamtheit, die durch den Ring (5) und die Einsätze (8) gebildet ist, umhüllt, wobei diese Letzteren bündig eingelassen sind, und wovon ein Körper (21) die Basis (3) des Anschlusses (1a) sowie die Plättchen (9) und den Abstandshalter (10) umhüllt, wobei die transversale Stirnfläche (100) des Abstandshalters (10) sowie ein Teil eines Ansatzes (91), den das Plättchen (9) aufweist, bündig eingelassen sind.

7. Verfahren nach Anspruch 6, **dadurch gekennzeichnet, dass** der Schritt des Überformens mit der Isolierumhüllung (2) eine Phase des Überformens ausgehend von dem Körper (21) mit einer Verkleidung (22), die sich über die gesamte Länge des Gewindestifts (4) erstreckt, umfasst, wobei der Außendurchmesser der Verkleidung gleich jenem des Körpers (21) ist und ihr Innendurchmesser größer als jener des Gewindestifts (4) ist, um um diesen einen Zwischenraum zum Einsetzen einer Metallhülse eines Elektrokabels des Fahrzeugs auszubilden, wobei auf der Länge der Verkleidung (22) ein Indexierungsfenster (24) für die Anordnung der Hülse um den Gewindestift (4) ausgebildet ist.

## Claims

1. Connection terminal for the electrically insulated linking of an electric cable of a motor vehicle to a rotating electric machine of said vehicle, said terminal consisting, on the one hand, of a core (1) which bears female means (5, 6, 8) for its electrically insulated fastening to a heat sink of said rotating electric machine, electrically conductive male means (4) for connecting to a female metal lug arranged at one end of said electric cable, and electrically conductive means (9, 10) for connecting to a current outlet terminal of said rotating electric machine; and, on the other hand, of a jacket (2) produced by overmoulding an electrically insulating material on said core (1), said insulating jacket (2) entirely jacketing all of said female fastening means (5, 6, 8) and electrically conductive connection means (9, 10), apart from the surfaces (91, 100) for connection respectively to said current outlet terminal and to said female metal lug, **characterized in that** said female fastening means comprise two inserts (8) produced in an insulating material with high thermal and mechanical characteristics.

2. Connection terminal according to Claim 1, **characterized in that** said core (1) comprises a terminal (1a) from the base (3) of which extend, on the one hand, a threaded rod (4) for connection to said female metal lug of said electric cable of the vehicle, and, on the other hand, opposite said threaded rod (4), a ring (5) through the orifice (6) of which the electrically insulated fixing to a heat sink is carried out, which is itself linked to the ground, of the rotating electric machine.

3. Connection terminal according to Claim 2, **characterized in that** said two inserts (8) are inserted into said orifice (6) respectively at each of the faces of said ring (5), each of said inserts (8) comprising a part (80) bearing on the face of the ring (5) through which it is fitted, a bush (81) being inserted into said orifice (6), and a through orifice (83).

4. Connection terminal according to any one of Claims 1 to 3, **characterized in that** the overmoulded insulating jacket (2) comprises indexing means (23) on the heat sink of the rotating electric machine.

5. Connection terminal according to any one of Claims 1 to 4, **characterized in that** the insulating jacket (2) comprises a skirt (22) in which is formed an indexing window (24) for the mounting of the metal lug of the electric cable of the vehicle.

6. Method for manufacturing a connection terminal according to any one of Claims 1 to 5, **characterized in that** it comprises:
- a step of production of a core (1) formed from a terminal (1a) from the base (3) of which extend, on either side, respectively, a threaded rod (4) for connection to a female metal lug of an electric cable of the vehicle, and, on the other hand, opposite said threaded rod (4), a ring (5) through the orifice (6) of which said connection terminal is fastened to the rotating electric machine of the vehicle,
- a step of insertion, into said orifice (6), respectively at each of the faces of said ring (5), of two inserts (8) produced in an insulating material with high thermal and mechanical properties each comprising a bearing washer (80) on the face through which it is inserted on said ring (5), a bush (81) which is inserted into said orifice (6), and a through orifice (83),
- a step of force fitting, in abutment against the face of said base (3) opposite said ring (5), of a conductive plate (9), then of insertion, in abutment against said plate (9), of a spacer (10),
- a step of overmoulding, over the assembly formed by said terminal (1a), the inserts (8) fitted into the orifice (6), the plate (9) and the spacer (10), of an insulating jacket (2) of which a part (20) jackets the assembly formed by the ring (5) and said inserts (8) leaving the latter flush, and of which a body (21) jackets the base (3) of said terminal (1a) and said plates (9) and spacer (10) flush the extreme transverse face (100) of the spacer (10) and a part of an appendage (91) that the plate (9) includes.

7. Method according to Claim 6, **characterized in that** the step of overmoulding of the insulating jacket (2) comprises a phase of overmoulding, from said body (21), of a skirt (22) extending over all of the length of the threaded rod (4), a skirt whose outer diameter is substantially equal to that of said body (21), and the inner diameter of which is greater than that of said threaded rod (4) to form around the latter a space for insertion of a metal lug of an electric cable of the vehicle, a skirt (22) over the length of which is formed an indexing window (24) for the fitting of said lug around the threaded rod (4).
